# EUROPEAN PATENT SPECIFICATION

(11) **EP 4 272 534 B1**
(45) Date of publication and mention of the grant of the patent: **24.06.2026**
(21) Application number: 20851353.1
(22) Date of filing: 30.12.2020
(51) Int. Cl.: A01D 34/73

(54) **REVERSIBLE SHREDDING BLADE FOR BRUSH CUTTER OR MOWER**
UMDREHBARES HEXELMESSER FÜR EINEN TRIMMER ODER RASENMÄHER
LAME DE HACHAGE RÉVERSIBLE POUR DÉBROUSSAILLEUSE OU TONDEUSE

(43) Date of publication of application: 08.11.2023
(73) Proprietor: Simões Marques, António José, 3780-474 Moita (PT)
(72) Inventor: Simões Marques, António José, 3780-474 Moita (PT)
(74) Representative: Pereira da Cruz, Joao
(86) International application number: PCT/PT2020/050059
(87) International publication number: WO 2022/146155

(56) References cited:
- US-A- 2 857 729
- US-A1- 2015 359 172
- US-B1- 6 446 346

## Description

### TECHNICAL FIELD OF THE INVENTION

This invention falls within the scope of mechanical engineering and relates to a shredding blade for brush cutters or mowers, in particular to a reversible shredding blade, and even more particularly to a reversible shredding blade with sixteen cutting points. The following documents are state of the art in the field: US 2015/359172 A1, US 6 446 346 B1, US 2 857 729 A.

### PRIOR ART OF THE INVENTION

Scrub clearance of forest lands is currently mandatory by law, and is usually done with an implement tractor. However, the access of the implement tractor for this purpose is often made impossible, due to irregularities of the land surface or discrepancies in the location of the trees, or simply because of the size of the land that does not justify using the tractor, which leads to most of the clearing of forests being achieved with a brush cutter, but also in the clearing of the sides of highways and public roads. This equipment, referred to as brush cutter or mower, is comprised of shredding blades, most of them presenting only four cutting points, and the bush cutting is carried out by performing successive vertical movements, from top to bottom and from bottom to top. However, since the existing blades do not have cutting elements at the upper section of the main body of the blade, the down-top (upward) movement is wasted because no cutting of vegetation is done.

This invention finds its closest state of the art in the Portuguese patent PT108903B in which a mower or brush cutter blade with six cutting points is disclosed, accounting for a significant increase in the user's work performance, since it allows cleaning to be carried out more quickly, it solves the wasting of the upward movement, in as much as it presents a pair of cutting elements with which one can take advantage of the said movement, thus providing an increase in performance, implying a reduction in the cleaning time as well as offering the user a higher work efficiency.

Even so, this blade does not clean all of the targeted vegetation, such as shrubs, acacia shoots and other trees up to 5cm in diameter, all kinds of bushes and brambles. So, for the forest cleaning to be effective, it is often necessary to use chainsaws and specific blades for brush cutters or mowers, which means using two machines for the same purpose in agricultural work. The same applies to the cleaning around fruit trees, and also cutting the virgin or wild shoots and the trees up to 2.5m high.

### TECHNICAL PROBLEMS SOLVED BY THE INVENTION

This invention solves all of the aforementioned problems simultaneously, i.e. cleaning up all kinds of forest vegetation, from grass and brambles to more robust shrubs and small diameter trees, also managing to do some agricultural work, such as cleaning around fruit trees, cutting branches and even trees up to 2.5m high.

This invention relates to a reversible shredding blade for brush cutter or mower, namely used for clearing forests in order to control spontaneous vegetation, whose operation is based on a rotation movement thereof provided by the brush cutter engine, which allows it to cut and shred when it comes into contact with vegetation. The shredding blade is a propeller with four blades, each with both sides cutting up to their ends, the said ends being sloped in relation to the plane of the central hole. The slope of those ends is +/-65° relatively to the blade and alternately from blade to blade, up and down in relation to the plane of the blades. This +/-65° slope has the advantage of preventing the grass from sticking to the blade, causing an imbalance in rotation and a high level of vibration to both the machine and the operator. The shredding blades currently available on the market have a 90° slope which makes them ineffective on grass.

The fact that the blades have the ends facing up, i.e. sloped, gives them the cutting capacity of a pruner, thus greatly increasing the yield with minimum physical effort on the part of the operator.

Another advantage of the blades with the ends facing the operator, i.e. sloped, is that they not only shred very effectively, but also move the vegetation that has just been cut to the side, keeping the working area always clean for a better work performance. Additionally, with this invention, the shredding of vegetation is achieved without resorting to a top-down movement, i.e. downwards, as required by the currently used blades, which is very exhausting. The simple translational motion of the user, i.e., from right to left and vice-versa, with the blade in a rotary movement, is sufficient for these cleaning operations, since the rotation itself performs the upward and downward movement of the various blades that make up the propeller, which represents a significant reduction of the physical stress to the operator. Since the arms stay down most of the time, due to the cut being made from the bottom upwards instead of the opposite, it is possible to avoid the friction created by the vegetation when squeezed against the ground, which would cause an impediment to a good cut or shredding.

Last but not least, it should be noted that 90% of the shredding blade wear is in the section of the cutting points which are positioned on the surface of the blade that is facing the working area, i.e. the vegetation, so one can reuse the shredding blade with only 10% wear if, when reaching the 90% on one face, the other face is used. Thereby, a reversible shredding blade is provided, which means greater sustainability, as well as energy and raw material savings.

### BRIEF DESCRIPTION OF THE FIGURES

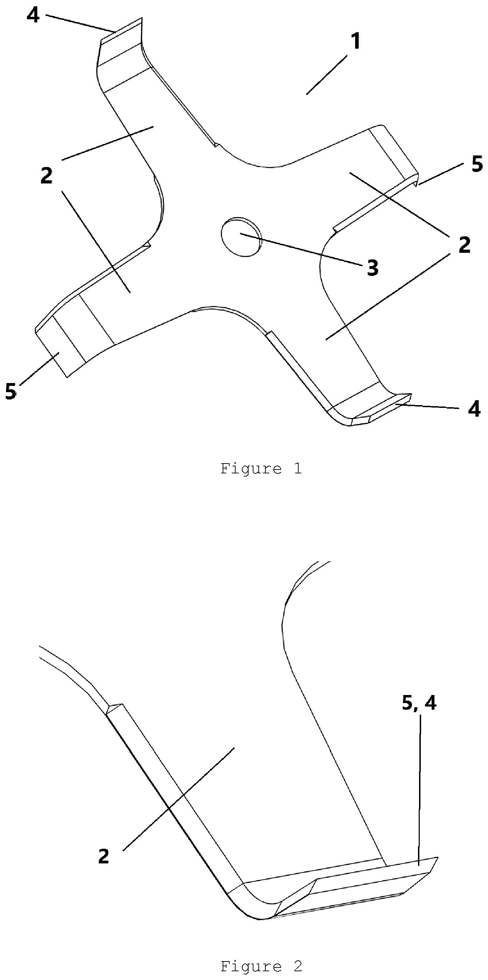

Figure 1 - Perspective view of the reversible shredding blade (1), in which the geometry of the four-blade (2) propeller is illustrated, the said blades being double-laminated along their sides and to their ends, the said ends (4) (5) being sloped; with a central hole (3) being also shown. The present slope of the ends (4) (5) of each blade can be observed, which is alternated relatively to the plane of the blades (2) from end to end, implying either a positive or negative slope.
Figure 2 - Detail view of the double-laminated blade constituting the ends along its sides and up to its sloped ends (4) or (5).

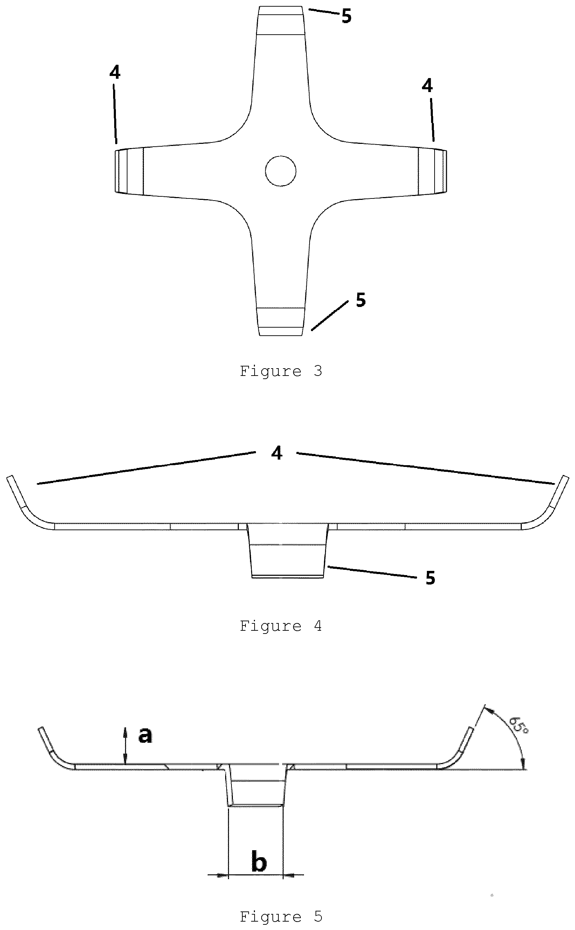

Figure 3 - Top view of the reversible shredding blade (1).
Figure 4 - Front view of the reversible shredding blade (1), wherein the sloped ends (4) (5) are illustrated.
Figure 5 - Front view of the reversible shredding blade (1), wherein both the height of the sloped ends (4) (5) relatively to their base and the width (b) are shown.

### DETAILED DESCRIPTION OF THE INVENTION

For the purposes of interpreting the invention, in the context of this document, it shall be understood that:
- four-bladed (2) propeller blade designates a blade with four tips, wherein each tip corresponds to a blade (2);
- blade (2) is one of the four tips that form the propeller;
- each of these four blades (2) is double-laminated along its sides and to its ends, i.e., it consists of two blades on both sides and is therefore laterally sharp-cutting;
- each of the blades (2) comprise sloped ends (4) (5) and the sides are sharp-cutting;
- the base of the blade (1) is the blade's section wherein the central hole (3) is located;
- thus, the present invention is a four-bladed propeller blade.

Therefore, this invention relates to a reversible shredding blade (1) for brush cutter, which is comprised of four blades (2) laterally laminated to their ends, those blades (2) comprising sloped ends (4) (5); it is additionally provided with a central hole (3), located in its axis of rotation, for insertion in any brush cutter.

It should be noted that the ends of the blades are sloped, this slope being relative to the plane of the blades (2) and alternate from end to end, implying either a positive or a negative slope of the ends, which means that when the blade is in operation two ends are facing the operator and the other two are facing the working area. This results in 90% wear of the shredding blade in the cutting points that are positioned on the side of the blade facing the working area, i.e. the vegetation, so one can reuse the shredding blade with only 10% wear on the side of the blade facing the operator. This re-use applies when one side has reached 90% wear.

In a preferred embodiment, the slope of the ends (4) (5), of the blades (2) is +/-65°, which provides an anti-sticking effect to the vegetation. The height (a) at which the ends (4) (5) are from the base of the blade (1) is 23.7mm; the width (b) of the ends (4) (5) is 35mm and the distance between the symmetrical sloped ends is 280mm, i.e. the diameter of the propeller.

In a preferred embodiment, the thickness of the blades is 3mm, thus providing greater consistency and effectiveness when performing the cut.

The blade object of the present invention comprises, on its whole, sixteen cutting points:
- eight blades operate with clockwise rotation: four blades in the plane of the blades (2), on one of the sides of each blade; and four at the ends (4) (5);
- with a counter-clockwise rotation, there are also eight blades in operation: the other four blades in the plane of the blades (2), on the opposite sides; and four blades at the ends.

The possibility of using sixteen working blades gives the invention an unparalleled power on the market as regards cutting and shredding any kind of vegetation, with up to 50% less physical effort, as well as an exceptional work yield, which is unique on the market, both in terms of quantity and quality, since the grinding of vegetation is greatly increased.

The set of all blades (2) presents as one single piece, with no additional welding or binder being required, and the material is steel, preferably Hardox 450.

## Claims

1. A reversible shredding blade for brush cutter, comprising:
a) a four-bladed (2) propeller blade (1);
b) each of said four blades (2) being double-laminated along their sides and up to their ends (4) (5);
c) the ends (4) (5) of the blades (2) being sloped relative to the plane of the blades (2), wherein said slope of each end (4) (5) is alternated relatively to the plane of the blades (2) being either a positive or a negative slope;
d) a central hole (3) located at their axis of rotation.

2. A reversible shredding blade according to the previous claim wherein the slope the ends (4) (5) is 65° in relation to the plane of the blade.

3. A reversible shredding blade according to claim 1 wherein the slope the ends (4) (5) is -65° in relation to the plane of the blade.

4. A reversible shredding blade according to any of the previous claims wherein the height (a) at which the ends (4) (5) are from the base of the blade (1) is 23.7mm, the width (b) each end (4) (5) is 35mm and the distance between the tips of opposite symmetrical sloped ends which corresponds to the diameter of the propeller blade (1) is 280mm.

5. A reversible shredding blade according to any of the previous claims wherein the thickness of the blades (2) is 3mm.

6. A reversible shredding blade according to any of the previous claims wherein the blade (1) is one single piece, whose material is steel, preferably Hardox 450.

## Patentansprüche

1. Wendbares Zerkleinerungsmesser für Freischneider, umfassend:
a) ein vierblättriges (2) Propellerblatt (1);
b) wobei jedes der vier Blätter (2) entlang seiner Seiten und bis zu seinen Enden (4) (5) doppelt laminiert ist;
c) wobei die Enden (4) (5) der Blätter (2) relativ zur Ebene der Blätter (2) geneigt sind, wobei die Neigung jedes Endes (4) (5) relativ zur Ebene der Blätter (2) abwechselnd entweder positiv oder negativ ist;
d) eine zentrale Bohrung (3), die an ihrer Drehachse angeordnet ist.

2. Wendbares Zerkleinerungsmesser gemäß dem vorstehenden Anspruch, wobei die Neigung der Enden (4) (5) 65° relativ zur Ebene des Blatts beträgt.

3. Wendbares Zerkleinerungsmesser gemäß Anspruch 1, wobei die Neigung der Enden (4) (5) relativ zur Ebene des Blatts -65° beträgt.

4. Wendbares Zerkleinerungsmesser gemäß einem der vorstehenden Ansprüche, wobei die Höhe (a), in der sich die Enden (4) (5) von der Basis des Blatts (1) befinden, 23,7 mm beträgt, die Breite (b) jedes Endes (4) (5) 35 mm beträgt und der Abstand zwischen den Spitzen der gegenüberliegenden, symmetrisch geneigten Enden, der dem Durchmesser des Propellerblatts (1) entspricht, 280 mm beträgt.

5. Wendbares Zerkleinerungsmesser gemäß einem der vorstehenden Ansprüche, wobei die Dicke der Blätter (2) 3 mm beträgt.

6. Wendbares Zerkleinerungsmesser nach einem der vorstehenden Ansprüche, wobei das Blatt (1) einteilig ist und aus Stahl, vorzugsweise Hardox 450, besteht.

## Revendications

1. Lame déchiqueteuse réversible pour débroussailleuse, comprenant :
a) une lame en forme d'hélice (1) à quatre ailettes (2) ;
b) chacune desdites quatre ailettes (2) étant doublement laminées le long de leurs bords et jusqu'à leurs extrémités (4)(5) ;
c) les extrémités (4)(5) des ailettes (2) étant inclinées par rapport au plan des ailettes (2), ladite inclinaison de chaque extrémité (4) (5) étant alternée par rapport au plan des ailettes (2), présentant soit une inclinaison positive, soit une inclinaison négative ;
d) un orifice central (3) situé sur son axe de rotation.

2. Lame déchiqueteuse réversible selon la revendication précédente, où l'inclinaison des extrémités (4)(5) est de 65° par rapport au plan de l'ailette.

3. Lame déchiqueteuse réversible selon la revendication 1 où l'inclinaison des extrémités (4)(5) est de -65° par rapport au plan de l'ailette.

4. Lame déchiqueteuse réversible selon l'une quelconque des revendications précédentes, où la hauteur (a) à laquelle se situent les extrémités (4)(5) par rapport à la base de la lame (1) est de 23,7 mm, la largeur (b) de chaque extrémité (4)(5) est de 35 mm et la distance entre les pointes des extrémités inclinées opposées et symétriques, correspondant au diamètre de la lame en hélice (1), est de 280 mm.

5. Lame déchiqueteuse réversible selon l'une quelconque des revendications précédentes, où l'épaisseur des ailettes (2) est de 3 mm.

6. Lame déchiqueteuse réversible selon l'une quelconque des revendications précédentes, où la lame (1) est constituée d'une seule pièce, réalisée en acier, de préférence en Hardox 450.
